Europäisches Patentamt

European Patent Office

Office européen des brevets

(11) Veröffentlichungsnummer: **0 331 967**

**A2**

## (12) EUROPÄISCHE PATENTANMELDUNG

(21) Anmeldenummer: 89102969.6

(22) Anmeldetag: 21.02.89

(51) Int. Cl.⁴: **B65G 47/26 , B65B 35/30**

(30) Priorität: 09.03.88 DE 3807693

(43) Veröffentlichungstag der Anmeldung:
13.09.89 Patentblatt 89/37

(84) Benannte Vertragsstaaten:
**AT BE CH DE ES FR GB GR IT LI LU NL SE**

(71) Anmelder: **Schmalbach-Lubeca AG**
**Schmalbachstrasse 1**
**D-3300 Braunschweig(DE)**

Anmelder: **Halle, Eberhard**
**Bunzlaustrasse 2**
**D-3300 Braunschweig(DE)**

(72) Erfinder: **Müller, Jürgen**
**Rheinring 7**
**D-3300 Braunschweig(DE)**
Erfinder: **Halle, Eberhard**
**Bunzlaustrasse 2**
**D-3300 Braunschweig(DE)**

(74) Vertreter: **Döring, Rudolf, Dr.-Ing.**
**Patentanwälte Dr.-Ing. R. Döring Dipl.-Phys.**
**Dr. J. Fricke Jasperallee 1a**
**D-3300 Braunschweig(DE)**

(54) Transportvorrichtung für zylindrische Stränge aus einer Vielzahl nebeneinander angeordneter scheibenförmiger Werkstücke, insbesondere Deckel aus Metall.

(57) Eine Transportvorrichtung für zylindrische Stränge (1) aus einer Vielzahl nebeneinander angeordneter scheibenförmiger Werkstücke, wie Deckel aus Metall, weist eine Förderrinne (4) auf, längs welcher die in einem Stapel in Längsrichtung bewegten Werkstücke in die Stränge unterteilt bis zu einer Entnahmestation (E) weiterbefördert werden. Zur Aufrechterhaltung der Lücken (7) zwischen den Strängen sind zwischen die Stränge einschiebbare Kugeln (8) vorgesehen, welche im Bereich einer Zähl- und Einschubeinrichtung (2) in die dort von der Vorschubeinrichtung gebildete Lücke eingeschoben werden. Die Rückführung der Kugeln (8) von der Entnahmestation (E) zu der Einschubeinrichtung (9) erfolgt über eine geneigt verlaufende Rückführrinne (10), die seitlich oder unterhalb der Förderrinne angeordnet ist. Für die Aufrechterhaltung der Lücken (7) zwischen den Strängen (1) und für die Rückführung der Kugeln (8) ist nur ein sehr geringer baulicher Aufwand erforderlich, wobei die Rückführung der Kugeln allein durch Schwerkraft erfolgt.

Fig. 1

## Transportvorrichtung für zylindrische Stränge aus einer Vielzahl nebeneinander angeordneter scheibenförmiger Werkstücke, insbesondere Deckel aus Metall

Die Erfindung betrifft eine Transportvorrichtung für zylindrische Stränge aus einer Vielzahl nebeneinander angeordneter scheibenförmiger Werkstücke, insbesondere Deckel aus Metall, mit einer Förderrinne, auf der die in einem Stapel in dessen Längsrichtung bewegten Werkstücke in die Stränge unterteilt und die Stränge durch eine Vorschubeinrichtung unter Bildung jeweils einer Lücke von den nachfolgenden Werkstücken des Stapels getrennt und bis zu einer Entnahmestation weiterbefördert werden.

Insbesondere im Zusammenhang mit der Fertigung von Deckein aus Metall für Konservendosen bzw. Getränkedosen werden häufig Transportvorrichtungen der beschriebenen Art benötigt, die im Zuge längerer Förderrinnen angeordnet werden, beispielsweise im Anschluß an Zähleinrichtungen, die ihrerseits mit der Vorschub einrichtung zusammenwirken, um Stränge zu bilden, welche jeweils die gleiche Anzahl von Deckein aufweisen und die nachfolgend in einer Verpackungsmaschine mit einer Umhüllung versehen werden.

Die Unterteilung eines Stapels in einzelne Stränge und deren Weiterförderung auf der Förderrinne kann auch im Zuge der Produktion bzw. der Bearbeitung der Deckel erforderlich werden, um eine bestimmte Anzahl von Deckein jeweils den Weiterbearbeitungsmaschinen zuzuführen.

Um die Stränge bei der Weiterförderung auf der Förderrinne getrennt zu halten, können diese der Einwirkung einer längs der Förderrinne geführten oder angeordneten Vorschubeinrichtung ausgesetzt werden.

Der Erfindung liegt die Aufgab ezugrunde, in die Transportvorrichtung der einleitend genannten Art zur Aufrechterhaltung der Lücken zwischen den Strängen eine Einrichtung zu integrieren, die weitgehend antriebsfrei arbeitet und sich durch einen konstruktiv sehr einfachen Aufbau sowie geringen Wartungsbedarf kennzeichnet.

Gelöst wird vorstehende Aufgabe dadurch, daß Kugeln als Trennelemente zwischen aufeinanderfolgenden Strängen dienen, daß die Förderrinne im Bereich der Vorschubeinrichtung mit einer Einrichtung zum Einschieben je einer der Kugeln in die jeweilige durch die Vorschubeinrichtung erzeugte Lücke zwischen den Strängen ausgerüstet ist, und daß sich von der Entnahmestation für die Stränge eine etwa parallel zu der Förderrinne verlaufende und bis zu der Einschubstelle der Kugeln in die Förderrinne geneigt verlaufende Rückführrinne für die Kugeln erstreckt.

Es ist zwar in einer nichtvorveröffentlichten Anmeldung in Verbindung mit einer Maschine zum Einwickeln von Deckelsträngen eine Einrichtung zum Einlegen von Distanzstücken zwischen die Deckelstränge beschrieben, jedoch handelt es sich dabei um zylindrische Distanzstücke, die über Verbindungsschächte oder -kanäle sowie darin angeordnete Kolbenzylinderanordnungen in eine parallel zu der Förderrinne verlaufende Rohrleitung überführt und in dieser Rohrleitung mittels Druckluft befördert werden müssen. Die zylindrischen Distanzstücke werden dabei gleitend zwischen den Strängen längs der Förderrinne bewegt und erfordern aufgrund ihrer Reibung eine Erhöhung der Schubkräfte, welche auf die Stränge und die Distanzstücke einwirken. Außerdem wird durch die zylindrischen Distanzstücke an der Förderrinne ein erhöhter Verschleiß verursacht.

Gegenüber diesem älteren Vorschlag lassen sich die zwischen den Strängen eingeschobenen und als Trennelemente wirksame Kugeln von den Strängen leicht in der Förderrinne mitbewegen, ohne daß eine Erhöhung der Vorschubkraft notwendig ist. Für die Rückführung der Kugeln ist kein Antrieb erforderlich, da diese bei der geneigten Anordnung der Rückführrinne allein aufgrund ihrer Schwerkraft zurück zur Einschubstelle gelangen. Dabei kann die Neigung der Rückführrinne wegen des geringen Rollwiderstandes der Kugeln außerordentlich gering gehalten werden. Bei Ausbildung der Rückführrinne als nach oben offene Rinne ist der Ablauf der Rückführbewegung der Kugeln von außen gut sichtbar, so daß irgendwelche Stauungen oder Störungen sofort erkannt werden können.

Der Durchmesser der Kugeln wird zweckmäßig so gewählt, daß er geringer als der Durchmesser der Deckel ist, jedoch den halben Durchmesser der Deckel nicht unterschreitet.

Zur Überwindung des Höhenunterschiedes der Rückführrinne von der Entnahmestation für die Stränge und der Einschubstelle der Kugeln in die Förderrinne ist zwischen einem Ende der Rückführrinne und der Förderrinne eine Hubeinrichtung für die Kugeln vorgesehen. Diese Hubeinrichtung kann entweder an der Entnahmestation für die Stränge oder aber an der Einschubstelle der Kugeln in die Förderrinne vorgesehen sein, je nachdem in welcher Höhe die Rückführrinne und damit die Einschubstelle der Kugeln in bezug auf die Förderrinne angeordnet ist.

Zweckmäßig ist es, wenn die Rückführrinne seitlich oder unterhalb der Förderrinne angeordnet ist, so daß der Bereich oberhalb der Förderrinne bzw. der auf der Förderrinne befindlichen Stränge frei bleibt für die Vorschubeinrichtung einerseits und die Entnahmeeinrichtung andererseits.

Eine besonders günstige und praktische Lösung ergibt sich, wenn die Rückführrinne seitlich an der Förderrinne angeordnet, d.h. an der Förderrinne befestigt ist, wenn im Bereich der Entnahmestation für die Stränge die Förderrinne und die Rückführrinne zur Überführung der Kugeln in die Rückführrinne in offener Verbindung stehen, und wenn die geneigt zur Einschubstelle verlaufende Rückführrinne für die Kugeln an diesem Ende mit einem Einlaufschacht verbunden ist, welcher unterhalb einer Bodenöffnung der Förderrinne angeordnet ist und eine Hubeinrichtung aufnimmt.

Sowohl die Rückführrinne als auch der Einlaufschacht werden bei dieser Ausbildung von der Förderrinne getragen, wobei der Einlaufschacht zweckmäßig ein geneigt verlaufendes Zwischenstück aufweist, mit dem der lotrecht unter der Bodenöffnung vorgesehene Schachtabschnitt mit der Rückführrinne verbunden ist.

Die Hubeinrichtung weist zweckmäßigerweise eine Kolbenzylinderanordnung auf, welche mit einem in dem Einlaufschacht geführten Hubglied verbunden ist.

Die Hubeinrichtung ist zweckmäßigerweise über die Vorschubeinrichtung steuerbar, so daß in Abhängigkeit von der Stellung der Vorschubeinrichtung die Hubeinrichtung betätigt wird.

Statt der Zuführung der Kugeln an der Einschubstelle durch eine Bodenöffnung der Förderrinne kann ohne weiteres auch die Zuführung der Kugeln von der Seite her in die Förderrinne vorgesehen sein. Bei dieser letztgenannten Anordnung empfiehlt es sich jedoch, gemäß Anspruch 5 die Rückführrinne im Bereich der Entnahmestation seitlich oberhalb der Förderrinne beginnen zu lassen und die Kugeln im Bereich der Entnahmestation mittels der Hubeinrichtung in die Rückführrinne zu überführen. Die Einrichtung zum Einschieben der Kugeln in die Förderrinne kann in diesem Falle aus einem geneigten Rinnenabschnitt, ggf. auch mit einem von der Vorschubeinrichtung betätigbaren Sperrorgan bestehen.

Ein Ausführungsbeispiel der Erfindung ist in der Zeichnung wiedergegeben.

Es zeigen:

Fig. 1 in perspektivischer Darstellung die Teildraufsicht auf eine Transportvorrichtung nach der Erfindung,

Fig. 2 in vergrößertem Maßstab einen senkrechten Schnitt durch die Einschubstelle für die Kugeln in die Förderrinne gemäß Fig .1.

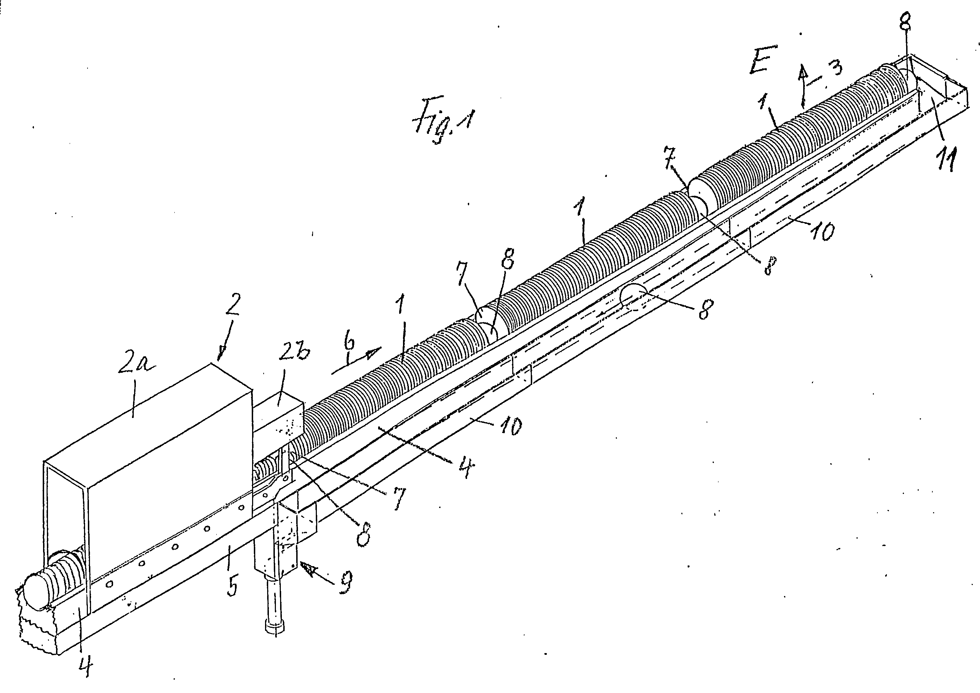

In der Fig. 1 ist ein Abschnitt der Transportvorrichtung für die zylindrischen Stränge 1 scheibenförmiger Werkstücke in der Form von Dosendeckeln wiedergegeben, der sich zwischen einer insgesamt mit 2 bezeichneten Zähl- und Vorschubeinrichtung und der mit E bezeichneten Entnahmestation erstreckt. Durch den in der Entnahmestation E gezeigten Pfeil 3 ist angedeutet, in welcher Richtung der in dieser Station jeweilig befindliche Strang entnommen werden soll. Die Entnahme kann dabei mit Hilfe von Greifern oder dgl. erfolgen, die nicht zur Erfindung gehören und deshalb auch in der Zeichnung nicht wiedergegeben sind.

Die dargestellte Transportvorrichtung besteht aus einer Förderrinne 4, die in dem dargestellten Beispiel auf einem Tragbalken 5 angeordnet ist, der seinerseits in nicht dargestellter Weise auf einem Untergestell ruht.

Die Förderrinne 4 ist in ihrem Rinnenquerschnitt den Deckelsträngen 1 bzw. den diese Stränge bildenden Deckeln angepaßt. Die Deckelstränge 1 werden auf der Förderrinne 4 in Richtung des Pfeiles 6 von der Zähl-und Vorschubeinrichtung 2 zu der Entnahmestation E gefördert. Die Förderrinne 4 erstreckt sich gegen die Förderrichtung über die Zähl- und Vorschubeinrichtung 2 hinaus und dient somit auch zur Zuführung der Deckel, die in einem durchgehenden Stapel zu der Zähl- und Vorschubeinrichtung gelangen.

Die Zähl- und Vorschubeinrichtung 2 ist in der Zeichnung nur rein schematisch wiedergegeben. In dem Ge häuse 2a sind die Zähleinrichtung und der Vorschubmechanismus untergebracht. Die eigentliche Vorschubeinrichtung befindet sich in dem Gehäuse 2b und kann beispielsweise aus hin- und her-verschiebbaren Vorschubstangen mit daran gehaltenen Schneiden oder Fingern bestehen, welche den aus der Zähleinrichtung 2a austretenden Strang abgezählter Deckel in Richtung des Pfeiles 6 bewegen, so daß zwischen diesem Strang und den nachfolgenden Deckeln eine Trennlücke 7 entsteht, in welche jeweils eine Kugel 8 als Trennelement eingeschoben wird, so daß die Lücken 7 bis zur Entnahmestation E zwischen den einzelnen Strängen 1 erhalten bleiben.

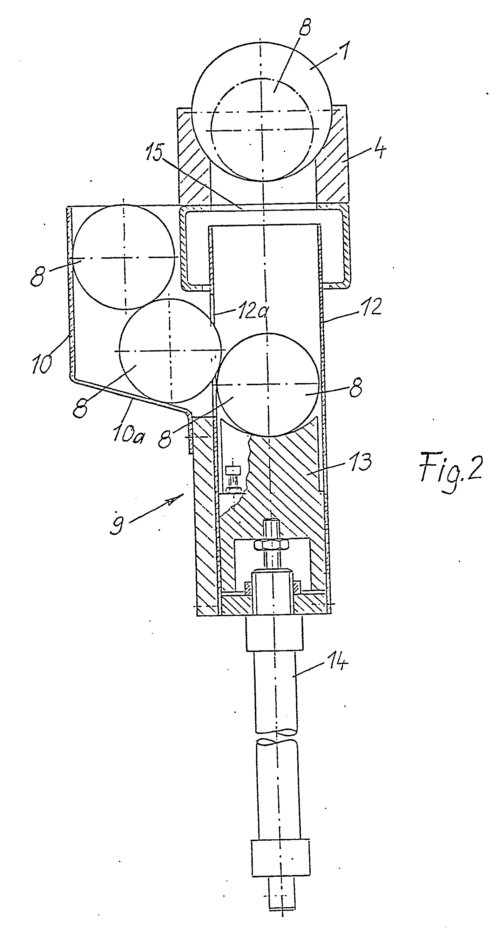

Zum Einschieben der Kugeln 8 in die im Bereich der Vorschubeinrichtung jeweils gebildete Trennlücke 7 dient eine insgesamt mit 9 bezeichnete Einschubeinrichtung, welche in vergrößerter Darstellung im Schnitt in der Fig. 2 wiedergegeben ist.

Die zwischen den Strängen 1 befindlichen Kugeln 8 werden längs der Förderrinne 4 mit den Strängen 1 durch den Vorschub der jeweils nachfolgenden Stränge bis in die Entnahmestation E bewegt und von dort aus über eine Rückführrinne 10 zur Einschubeinrichtung 9 zurückgeführt. Die Rückführrinne 10 ist in dem Beispiel der Fig. 1 seitlich an der Förderrinne 4 gehalten und verläuft gegenüber der Horizontalen geneigt, so daß die in der Entnahmestation E in die Rückführrinne 10 gelangenden Kugeln 8 aufgrund ihrer Schwerkraft in der Rückführrinne 10 zu der Einschubeinrichtung 9 rollen, ohne daß hierfür ein Antrieb erforderlich ist. In einfachster Weise kann die Überführung der Kugeln8 aus der Förderrinne 4 im Bereich der Entnahmestation E dadurch erfolgen, daß in der Seitenwandung der Förderrinne 4 und der Rückführrinne 10 eine korrespondierende Durchbrechung 11 vorgesehen ist und im Bereich dieser Durchbrechung 11 der Rinnenboden der Förderrinne 4 zur Rückführrinne 10 geneigt verläuft, so daß die Kugeln 8 über diese schräg verlaufende Bodenfläche der Förderrinne 4 in die Rückführrinne 10 gelangen und dort in der beschriebenen Weise zu der Einschubeinrichtung 9 rollen.

Die Einschubeinrichtung 9 weist gemäß Fig. 2 einen unterhalb der Förderrinne 4 angeordneten Einlaufschacht 12 auf mit lotrecht verlaufender Längsachse. Der Einlaufschacht 12 steht in offener Verbindung mit der Rückführrinne 10, die im Bereich der Einschubeinrichtung 9 einen vertieften und zu dem Schacht 12 hin geneigt verlaufenden Bodenabschnitt 10a aufweist. Die durch die Rückführrinne 10 zur Einschubeinrichtung 9 gelangenden Kugeln 8 werden über den geneigten Bodenabschnitt 10a durch die Öffnung 12a des Einlaufschachtes 12 in das Innere dieses Schachtes aufgrund ihrer Schwerkraft überführt. Der Schacht 12 nimmt ein Hubglied 13 in Form eines kolbenförmigen Teiles auf, das mit einer Kolbenzylinderanordnung 14 verbunden ist. Bei Betätigung der Kolbenzylinderanordnung 14 wird das Hubglied 13 mit der darauf befindlichen Kugel 8 nach oben bewegt, so daß die Kugel 8 durch eine Bodenöffnung 15 in der Förderrinne 4 in die im Bereich der Vorschubeinrichtung gebildete Lücke zwischen dem Strang der abgezählten Deckel und den nachfolgenden Deckeln gelangt. Das Hubglied 13 verharrt in dieser hochgefahrenen Position, bis die in die Lücke 7 angehobene Kugel 8 außerhalb des Bereiches der Bodenöffnung 15 der Förderrinne zu liegen kommt, und fährt dann zurück in die in Fig .2 wiedergegebene Position, um die nächste Kugel 8 aufzunehmen.

Die Steuerung der aus dem Hubglied 13 und der Kolbenzylinderanordnung 14 bestehenden Hubeinrichtung erfolgt durch die Vorschubeinrichtung in der Weise, daß unmittelbar nach der jeweiligen Trennung des aus der Zähl- und Vorschubeinrichtung austretenden Stranges 1 die nächste Kugel 8 in die entsprechende Lücke 7 oberhalb der Einschubeinrichtung 9 überführt wird.

Die Fig. 2 läßt erkennen, daß die Kugeln 8 einen geringeren Durchmesser als die Deckel der Stränge 1 aufweisen. Hierdurch können die Deckel der Stränge 1 über die Bodenöffnung 15 der Förderrinne 4 unter Aufrechterhaltung ihrer Abstützung durch die Förderrinne 4 hinwegbewegt werden.

Statt der in der Fig. 1 wiedergegebenen seitlichen Anordnung der Rückführrinne 10 in bezug auf die Förderrinne 4 kann die Rückführrinne 10 auch unterhalb der Förderrinne 4 angeordnet sein. In diesem Falle würden die Kugeln 8 in der Entnahmestation E aus der Förderrinne 4 durch eine Bodenöffnung dieser Rinne in die Rückführrinne 10 überführt werden. Im Bereich der Einschubeinrichtung 9 würde die Rückführrinne 10 unmittelbar in dem Einlaufschacht 12 münden, so daß also die in Fig. 2 wiedergegebene seitliche Zuführung der Kugeln 8 entfällt. Die Überführung der Kugeln von der Förder- in die Rückführrinne kann an jeder Stelle der Entnahmestation, also auch am Anfang dieser Station, vorgesehen sein.

## Ansprüche

1. Transportvorrichtung für zylindrische Stränge aus einer Vielzahl nebeneinander angeordneter scheibenförmiger Werkstücke, insbesondere Deckel aus Metall, mit einer Förderrinne, auf der die in einem Stapel in dessen Längsrichtung bewegten Werkstücke in die Stränge unterteilt und die Stränge durch eine Vorschubeinrichtung unter Bildung jeweils einer Lücke von den nachfolgenden Werkstücken des Stapels getrennt und bis zu einer Entnahmestation weiterbefördert werden, **dadurch gekennzeichnet,** daß Kugeln (8) als Trennelemente zwischen aufeinanderfolgenden Strängen (1) dienen, daßdie Förderrinne (4) im Bereich der Vorschubeinrichtung mit einer Einrichtung (9) zum Einschieben je einer der Kugeln in die jeweilige durch die Vorschubeinrichtung erzeugte Lücke (7) zwischen den Strängen ausgerüstet ist, und daß sich von der Entnahmestation (E) für die Stränge eine etwa parallel zu der Förderrinne und bis zu der Einschubstelle der Kugeln in die Förderrinne geneigt verlaufende Rückführrinne (10) für die Kugeln erstreckt.

2. Transportvorrichtung nach Anspruch 1, **dadurch gekennzeichnet,** daß zwischen einem Ende der Rückführrinne (10) und der Förderrinne (4) eine Hubeinrichtung (13; 14) für die Kugeln (8) vorgesehen ist.

3. Transportvorrichtung nach Anspruch 1 oder 2, **dadurch gekennzeichnet,** daß die Rückführrinne (10) seitlich oder unterhalb der Förderrinne (4) angeordnet ist.

4.Transportvorrichtung nach einem der vorhergehenden Ansprüche, **dadurch gekennzeichnet,** daß die Rückführrinne (10) seitlich an der Förderrinne (4) angeordnet ist, daß im Bereich der Entnahmestation (E) für die Stränge (1) die Förderrinne und die Rückführrinne zur Überführung der Kugeln (8) in die Rückführrinne in offener Verbindung stehen, und daß die geneigt zur Einschubstelle verlaufende Rückführrinne für die Kugeln an diesem Ende mit einem Einlaufschacht (12) verbunden ist, welcher unterhalb einer Bodenöffnung (15) der Förderrinne angeordnet ist und eine Hubeinrichtung (13;14) aufnimmt.

5. Transportvorrichtung nach einem der Ansprüche 1 bis 3, **dadurch gekennzeichnet**, daß die Rückführrinne (10) seitlich an der Förderrinne (4) angeordnet ist, daß im Bereich der Entnahmestation (E) für die Stränge (1) eine Hubeinrichtung für die Kugeln (8) in die in der Entnahmestation höhergelegene Rückführrinne vorgesehen ist und daß die Rückführrinne im Bereich der Einschubstelle der Kugeln in die Förderrinne mit der Förderrinne in offener Verbindung steht, so daß die Stränge der Werkstücke als Sperrorgane für die Kugeln bis zum Einschub in die jeweilig entstehende Lükke dienen.

6. Transportvorrichtung nach Anspruch 4 oder 5, **dadurch gekennzeichnet**, daß die Hubeinrichtung (13;14) eine Kolbenzylinderanordnung (14) aufweist.

7. Transportvorrichtung nach einem der vorhergehenden Ansprüche, **dadurch gekennzeichnet**, daß die Hubeinrichtung (13;14) über die Vorschubeinrichtung steuerbar ist.

Fig.1

EP 0 331 967 A2

Fig.2